# EUROPÄISCHE PATENTSCHRIFT

(11) **EP 2 705 750 B1**
(45) Veröffentlichungstag und Bekanntmachung des Hinweises auf die Patenterteilung: **01.11.2017**
(21) Anmeldenummer: 13004073.6
(22) Anmeldetag: 16.08.2013
(51) Int. Cl.: A01M 7/00, A01C 23/00

(54) **Schleppschlauchverband**
Drag hose unit
Pendillards

(30) Priorität: 06.09.2012 DE 102012017633
(43) Veröffentlichungstag der Anmeldung: 12.03.2014
(73) Patentinhaber: Lemken GmbH & Co. KG, 46519 Alpen (DE)
(72) Erfinder: Surborg, Carsten, 46519 Alpen (DE)
(74) Vertreter: Schulte & Schulte

(56) Entgegenhaltungen:
- EP-A1- 0 015 325
- DE-A1- 3 018 217
- DE-A1- 4 119 992
- DE-A1- 19 703 183
- DE-U1- 20 320 041

## Beschreibung

Die Erfindung betrifft einen Schleppschlauchverband. Ein solcher Schleppschlauchverband ist beispielsweise in der deutschen Offenlegungsschrift DE 30 18 217 A1 als Verteilbalken mit Schleppschläuchen beschrieben. Hier sind die Schleppschläuche in einem Abstand von 25 cm zueinander direkt an der Verteilleitung befestigt. Die EP 2 570 027 A2 zeigt ein Spritzgestänge mit schaltbaren Mehrfachdüsenkörpern, deren Auslässe teilweise 25 cm zueinander beabstandet sind und an denen einzelne Schleppschläuche befestigt sind. Handelsübliche Flachstrahldüsen zur Ausbringung von Pflanzenschutzmitteln, welche ebenfalls an einer solchen Verteilleitung angebracht werden können, benötigen jedoch in der Regel einen Abstand von 50 cm zueinander, um eine optimale Überlappung des Spritzbereiches der Flachstrahldüsen zu gewährleisten. Bei der Lösung, die der deutschen Offenlegungsschrift DE 30 18 217 A1 zu entnehmen ist, werden also doppelt so viele Anschlussstellen für die Schleppschläuche benötigt wie für die Flachstrahldüsen. Bei der EP 2 570 027 A2 werden zumindest doppelt so viele Schalteinrichtungen benötigt. Alle Schleppschlauchanschlüsse müssen zeitaufwendig einzeln montiert werden. Beim Einsatz von Flachstrahldüsen sind zudem Blindstopfen zum Verschluss der übrigen Anschlussstellen erforderlich. Dieses verteuert das System unnötig und zudem können sich Reste von Pflanzenschutzmitteln im Bereich dieser Blindstopfen anlagern, welche benachbarte Flachstrahldüsen verstopfen. Es sind auch Lösungen bekannt, in denen eine zweite Verteilleitung für Schleppschläuche lösbar am Spritzgestänge angebracht ist. Diese zweite Verteilleitung trägt eine größere Anzahl von Schleppschläuchen, die zusätzlich mit der Flüssigkeitszuleitung verbunden werden muss. Zwar können hier mehrere Schleppschläuche in einem Arbeitsschritt montiert werden, allerdings muss zusätzlich zu den vorhandenen Düsenhaltern oder Düsenventilen der zum Spritzgestänge gehörenden Verteilleitung nochmals die doppelte Anzahl Anschlüsse für die Schleppschläuche vorgesehen werden. Die deutsche Patentanmeldung DE 10 2004 053 085 A1 beschreibt einen Gülleverteiler mit Schleppschläuchen und innenliegender Verteilschnecke. Es sind weiter Lösungen bekannt, bei denen über einen T-Verbinder zwei Schleppschläuche im Abstand von 25 cm zueinander jeweils an einen Düsenhalter oder ein Düsenventil einer Verteilleitung angebracht sind, wobei die Düsenhalter oder Düsenventile, wie zuvor beschrieben, im Abstand von 50 cm zueinander angeordnet sind. Somit können bei Bedarf Flachstrahldüsen im Abstand von 50 cm und Schleppschläuche im Abstand von 25 cm an der gleichen Verteilleitung wahlweise verwendet werden. Eine solche Schleppschlauchanordnung beschreibt die europäische Patentanmeldung EP 0 015 325 A1. Der Nachteil einer Lösung mit T-Verbinder, wie sie auch aus der DE 30 18 217 A1 bekannt sind, ist, dass die Düsenhalter oder Düsenventile beim Durchfahren eines Pflanzenbestandes und bei Kontakt der Schleppschläuche mit dem Pflanzenbestand und mit Hindernissen hohen Belastungen unterworfen sind und dadurch beschädigt werden können.

Aufgabe der Erfindung ist es, die obigen Nachteile zu vermeiden und einen funktionssicheren Schleppschlauchverband mit günstigen Herstellkosten bereitzustellen, der einfach aufgebaut ist und der auch einfach montiert und demontiert werden kann.

Diese Aufgabe der Erfindung wird durch die Aufnahme mehrerer Schleppschläuche in einem biegesteifen Stützprofil und die Verwendung mehrerer Anschlussleitungen pro Stützprofil gelöst. Die von den Schleppschläuchen verursachten Kräfte werden über das Stützprofil auf diese Anschlussleitungen verteilt und somit wird nur ein Bruchteil der Kräfte auf die Düsenhalter oder Düsenventile übertragen.

Eine vorteilhafte Ausführung der Erfindung sieht vor, dass das Stützprofil alle Schleppschläuche einer Teilbreite des Spritzgestänges aufnehmbar ausgebildet ist. Somit können diese Schleppschläuche einer Teilbreite gemeinsam über eine Teilbreitenschaltung mit Flüssigkeit versorgt oder abgeschaltet werden.

In einer weiteren Ausführung der Erfindung sind Arretierungsmittel vorgesehen, die das Stützprofil in seiner Position fixierend ausgebildet sind. Hierdurch wird ein gleichmäßiger Abstand der Schleppschlauchenden zum Stützprofil erreicht.

Ein weiterer Vorschlag zielt darauf ab, dass das Stützprofil Ausnehmungen für die Durchführung der Anschlussleitungen und/oder der Schleppschläuche aufweist. Durch diese Ausnehmungen werden zum Beispiel die Anschlussleitungen durchgeführt und sorgen so für eine quasi formschlüssige Verbindung der Anschlussleitungen und des Stützprofils. Auf zusätzliche Befestigungsmittel kann in diesem Fall verzichtet werden. Das Stützprofil gibt damit quasi die Anordnung des flexiblen Schleppschlauchverbandes und die Ausrichtung der Schleppschläuche vor.

In Hinblick auf die Geometrie des Stützprofils wird vorgeschlagen, dass das Stützprofil als ein nach oben oder unten offenes U-förmiges Profil ausgebildet ist. Die Verwendung eines nach oben oder unten offenen U-förmigen Profils ermöglicht eine einfache Führung und Unterbringung der T-Stücke.

Eine weitere Ausführung der Erfindung sieht vor, dass das Längenmaß der Schleppschläuche mindestens dreimal größer ist als das Längenmaß des senkrechten Teiles der Anschlussleitungen. Um ein optimales Durchstreifen des Bestandes mit den Schleppschläuchen zu ermöglichen, sollten die Schleppschläuche wesentlich länger sein als die Anschlussleitungen. Insbesondere, wenn die Schleppschläuche mit zusätzlichen Rohren zur Aussteifung oder anhängenden Gewichten versehen sind, ist eine große Länge der Schleppschläuche von Vorteil, die mindestens der dreifachen Länge der Anschlussleitungen entsprechen sollte.

Eine besonders vorteilhafte Ausführung der Erfindung sieht Hilfsmittel vor, die das Stützprofil in einer für den Anbau an das Spritzgestänge erleichternden Position fixieren. Um die Montage des Schleppschlauches zu vereinfachen, können Hilfsmittel wie zum Beispiel Ketten, Laschen oder Haken an dem Stützprofil vorgesehen werden, womit das Stützprofil an dem Spritzgestänge aufgehängt werden kann, damit in bequemer Weise die Anschlussleitungen an den Düsenhaltern oder Düsenventilen des Spritzgestänges angebracht werden können.

Erfindungsgemäß ist weiter vorgesehen, dass ein oder mehrere Schleppschläuche jeweils einzeln oder in Gruppen über ein Düsenventil und der Anschlussleitung mit Flüssigkeit beaufschlagbar ausgebildet sind. Um den Einsatz zusätzlicher Flüssigkeitsventile zu vermeiden, werden die Schleppschläuche über die gleichen Einrichtungen mit Flüssigkeit beaufschlagt wie auch die Flachstrahldüsen des Feldspritzgestänges. Insbesondere bei einer Einzeldüsenschaltung kann der Vorteil der Ausbringgenauigkeit auch für den Einsatz mit Schleppschläuchen genutzt werden.

Das Stützprofil erstreckt sich nach Möglichkeit parallel zum Boden und dient zur Aufnahme mehrerer nebeneinander angeordneter Baugruppen, die jeweils aus zwei Schleppschläuchen, einer Anschlussleitung sowie einem zwischen den beiden Schleppschläuchen und der Anschlussleitung vorgesehenen Zwischenstück gebildet sind. Die Schleppschläuche sind demnach beidseitig mit dem Zwischenstück oder Zwischenabschnitt an dessen Unterseite, die Anschlussleitung ist von oben mit dem Zwischenstück verbunden.

Es empfiehlt sich, dass von der Baugruppe nur das Zwischenstück in das Stützprofil integriert, d. h. in diesem geführt ist. Über die bereits beschriebenen Ausnehmungen in dem Stützprofil sind Anschlussleitung und Schleppschläuche aus unterschiedlichen Richtungen mit dem Zwischenstück verbunden.

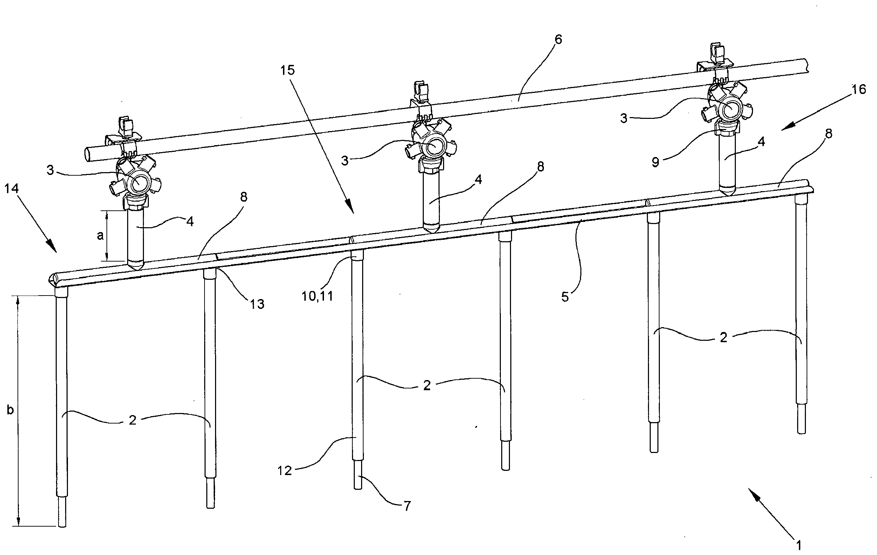

Weitere Einzelheiten der Erfindung sind der Figur zu entnehmen, die eine bevorzugte Ausführungsform des Schleppschlauchverbandes zeigt.

Die Figur zeigt einen Schleppschlauchverband 1, der an einer Verteilleitung 6 eines nicht dargestellten Spritzgestänges einer Feldspritze angebracht ist. Die Verteilleitung 6 ist Bestandteil einer Teilbreite des Spritzgestänges und versorgt die Düsenhalter oder Düsenventile 3 mit Flüssigkeit. Der Abstand der Düsenhalter und Düsenventile 3 der Verteilleitung 6 zueinander entspricht 50cm. Die Düsenventile 3 sind separat elektrisch oder pneumatisch schaltbar. An den Düsenventilen 3 sind die Anschlussleitungen 4 angeschlossen, die flexibel ausgebildet sind. Zum Anschluss dienen üblicherweise Schnellverschlüsse wie zum Beispiel Bajonettverschlüsse 9. Die Anschlussleitungen 4 weisen hier eine Länge a von etwa 12 cm auf. Die Anschlussleitungen können auch eine Länge a von 5 cm bis 15 cm aufweisen aber auch für besondere Anwendungsfälle kürzer oder länger sein. In diesem Ausführungsbeispiel sind drei Baugruppen, 14, 15 und 16 gemeinsam einem Stützprofil 5 zugeordnet. Eine Baugruppe umfasst jeweils zwei Schleppschläuche 2, eine Anschlussleitung 4 sowie das Zwischenstück 8. Die paarweise angeordneten Schleppschläuchen 2 sind von der Unterseite über die Verschraubung 11 oder mittels Schnellverschlüssen mit dem in das Stützprofil 5 integrierten Zwischenstück 8 verbunden. Von oben besteht eine Verbindung zwischen der Anschlussleitung 4 und dem Zwischenstück 8. Die zwei Endstücke 10 weisen seitlich zueinander etwa einen Abstand von 25 cm auf. An den Endstücken 10 sind die Schleppschläuche 2 angeschlossen, die etwa 50 cm bis 80 cm lang sind. In den unteren Enden 12 der Schleppschläuche 2 befinden sich Stabilisierungsrohre 7, die aus Kunststoff bestehen können. Die Verschraubungen 11 der Schleppschläuche 2 sind durch die Ausnehmungen 13 des Stützprofils 5 hindurchgeführt. Das Stützprofil 5 stellt so sicher, dass die T-Stücke 8 und die Schleppschläuche 2 fluchten. Die Verschraubungen 11 oder die Bajonettverschlüsse sind so ausgebildet, dass das Stützprofil 5 in seiner Lage fixiert ist. In den Verschraubungen 11 oder den Bajonettverschlüssen befinden sich Drosselblenden, die für einen geeigneten Druckaufbau im System sorgen, der für eine gleichmäßige Verteilung der Flüssigkeit Vorrausetzung ist.

## Patentansprüche

1. Landwirtschaftliche Kombination einer Feldspritze mit einem Spritzgestänge und einem Schleppschlauchverband (1) mit mehreren Schleppschläuchen (2) zum bodennahen Ausbringen von Flüssigkeiten auf Ackerflächen, wobei der Schleppschlauchverband (1) an dem Spritzgestänge eingesetzt wird, wobei das Spritzgestänge mindestens zwei Teilbreiten aufweist, wobei das Spritzgestänge mehrere Düsenhalter oder Düsenventile (3) aufweist, an denen die Schleppschläuche (2) über Anschlussleitungen (4) befestigt sind, wobei ein durchgehend biegesteifes Stützprofil (5) vorgesehen ist, das mindestens vier Schleppschläuche (2) aufnimmt, die über mindestens zwei Anschlussleitungen (4), welche flexibel ausgebildet sind, mit den Düsenhaltern oder Düsenventilen (3) des Spritzgestänges verbunden sind.

2. Landwirtschaftliche Kombination nach Anspruch 1,
**dadurch gekennzeichnet,**
**dass** das Stützprofil (5) alle Schleppschläuche (2) einer Teilbreite des Spritzgestänges aufnehmbar ausgebildet ist.

3. Landwirtschaftliche Kombination nach Anspruch 1,
**dadurch gekennzeichnet,**
**dass** Arretierungsmittel vorgesehen sind, die das Stützprofil (5) in seiner Position fixierend ausgebildet sind.

4. Landwirtschaftliche Kombination nach Anspruch 1,
**dadurch gekennzeichnet,**
**dass** das Stützprofil (5) Ausnehmungen für die Durchführung der Anschlussleitungen (4) und/oder der Schleppschläuche (2) aufweist.

5. Landwirtschaftliche Kombination nach Anspruch 1,
**dadurch gekennzeichnet,**
**dass** das Stützprofil (5) als ein nach oben oder unten offenes U-förmiges Profil ausgebildet ist.

6. Landwirtschaftliche Kombination nach Anspruch 1,
**dadurch gekennzeichnet,**
**dass** das Längenmaß (b) der Schleppschläuche (2) mindestens dreimal größer ist als das Längenmaß (a) des senkrechten Teiles der Anschlussleitungen (4).

7. Landwirtschaftliche Kombination nach Anspruch 1,
**dadurch gekennzeichnet,**
**dass** Hilfsmittel vorgesehen sind, die das Stützprofil (5) in einer für den Anbau an das Spritzgestänge erleichternden Position fixieren.

8. Landwirtschaftliche Kombination nach Anspruch 1,
**dadurch gekennzeichnet,**
**dass** ein oder mehrere Schleppschläuche (2) jeweils einzeln oder in Gruppen über ein Düsenventil (3) und der Anschlussleitung (4) mit Flüssigkeit beaufschlagbar ausgebildet sind.

9. Landwirtschaftliche Kombination nach Anspruch 1,
**dadurch gekennzeichnet,**
**dass** das Stützprofil (5) zur Aufnahme mehrerer nebeneinander angeordneter Baugruppen (14, 15, 16) dient, die jeweils aus zwei Schleppschläuchen (2), einer Anschlussleitung (4) sowie einem zwischen den beiden Schleppschläuchen (10) und der Anschlussleitung (4) vorgesehenen Zwischenstück (8) gebildet sind.

10. Landwirtschaftliche Kombination nach Anspruch 9,
**dadurch gekennzeichnet,**
**dass** das Zwischenstück (8) in das Stützprofil (5) integriert ist.

## Claims

1. Agricultural combination of a field sprayer with a sprayer boom and a drag hose assembly (1) with several drag hoses (2) for the ground-level application of liquids on arable land, wherein the drag hose assembly (1) is inserted in the sprayer boom,
wherein the sprayer boom comprises at least two sections,
wherein the sprayer boom comprises a plurality of nozzle holders or nozzle valves (3) to which the drag hoses (2) are attached via connection lines (4),
wherein a continuous bend-resistant support profile (5) is provided, which accommodates at least four drag hoses (2), which are connected to the nozzle holders or nozzle valves (3) of the sprayer boom via at least two connection lines (4) which are of a flexible design.

2. Agricultural combination according to claim 1,
**characterized in that**
the support profile (5) is designed to receive all the drag hoses (2) of a section of the sprayer boom.

3. Agricultural combination according to claim 1,
**characterized in that**
locking means are provided to fix the support profile (5) in its position.

4. Agricultural combination according to claim 1,
**characterized in that**
the support profile (5) comprises recesses for the passage of the connecting lines (4) and/or the drag hoses (2).

5. Agricultural combination according to claim 1,
**characterized in that**
the support profile (5) is designed as a U-shaped profile that is open at the top or at the bottom.

6. Agricultural combination according to claim 1,
**characterized in that**
the linear dimension (b) of the drag hoses (2) is at least three times greater than the linear dimension (a) of the vertical part of the connecting lines (4).

7. Agricultural combination according to claim 1,
**characterized in that**
means are provided to fix the support profile (5) in a position facilitating attachment to the sprayer boom.

8. Agricultural combination according to claim 1,
**characterized in that**
one or more drag hoses (2) are designed to be acted on by a liquid, individually or in groups, via a nozzle valve (3) and the connecting line (4).

9. Agricultural combination according to claim 1,
**characterized in that**
the support profile (5) serves to accommodate a plurality of subassemblies (14, 15, 16) arranged side by side, wherein each subassembly comprises two drag hoses (2) and a connecting line (4), as well as a spacer (8) provided between the two drag hoses (10) and the connecting line (4).

10. Agricultural combination according to claim 9,
**characterized in that**
the spacer (8) is integrated into the support profile (5).

## Revendications

1. Combinaison agricole d'un pulvérisateur agricole avec une rampe de pulvérisation et avec un système à pendillards (1) avec plusieurs pendillards (2) pour la distribution près du sol de liquide sur des surfaces agricoles, le système à pendillards (1) étant utilisé au niveau de la rampe de pulvérisation, la rampe de pulvérisation comprenant au moins deux largeurs partielles, la rampe de pulvérisation comprenant plusieurs supports de buses ou soupapes à buses (3), au niveau desquelles les pendillards (2) sont fixés par l'intermédiaire de conduites de raccordement (4), un profilé d'appui (5) rigide continu étant prévu, qui loge au moins quatre pendillards (2), qui sont reliés, par l'intermédiaire d'au moins deux conduites de raccordement (4), qui sont flexibles, avec les supports de buses ou les soupapes de buses (3) de la rampe de pulvérisation.

2. Combinaison agricole selon la revendication 1,
**caractérisée en ce que**
le profilé d'appui (5) est conçu de façon à loger tous les pendillards (2) d'une largeur partielle de la rampe de pulvérisation.

3. Combinaison agricole selon la revendication 1,
**caractérisée en ce que**
des moyens de blocage sont prévus, qui sont conçus de façon à fixer le profilé d'appui (5) dans sa position.

4. Combinaison agricole selon la revendication 1,
**caractérisée en ce que**
le profilé d'appui (5) comprend des évidements pour le passage des conduites de raccordement (4) et/ou des pendillards (2).

5. Combinaison agricole selon la revendication 1,
**caractérisée en ce que**
le profilé d'appui (5) est conçu comme un profilé en forme de U ouvert vers le haut ou vers le bas.

6. Combinaison agricole selon la revendication 1,
**caractérisée en ce que**
la dimension longitudinale (b) des pendillards (2) est au moins trois fois plus grande que la dimension longitudinale (a) de la partie verticales des conduites de raccordement (4).

7. Combinaison agricole selon la revendication 1,
**caractérisée en ce que**
des équipements sont prévus, qui fixent le profilé d'appui (5) dans une position facilitant le montage sur la rampe de pulvérisation.

8. Combinaison agricole selon la revendication 1,
**caractérisée en ce que**
un ou plusieurs pendillards (2) sont conçus de façon à pouvoir être alimentés en liquide de manière individuelle ou en groupes par l'intermédiaire d'une soupape de buse (3) et de la conduite de raccordement (4).

9. Combinaison agricole selon la revendication 1,
**caractérisée en ce que**
le profilé d'appui (5) permet le logement de plusieurs sous-ensembles (14, 15, 16) juxtaposés, qui sont constitués chacun de deux pendillards (2), d'une conduite de raccordement (4) ainsi qu'une pièce intermédiaire (8) prévue entre les deux pendillards (10) et la conduite de raccordement (4).

10. Combinaison agricole selon la revendication 9,
**caractérisée en ce que**
la pièce intermédiaire (8) est intégrée dans le profilé d'appui (5).
